# EUROPÄISCHE PATENTANMELDUNG

(11) **EP 4 528 612 A1**
(43) Veröffentlichungstag der Anmeldung: **26.03.2025**
(21) Anmeldenummer: 23198814.8
(22) Anmeldetag: 21.09.2023
(51) Int. Cl.: G06Q 10/0639, G06Q 50/04

(54) **AUSWAHL DER NACHHALTIGSTEN PRODUKTVARIANTE DURCH KONFIDENZ-BASIERTE WAHRSCHEINLICHKEITSBERECHNUNGEN**

(71) Anmelder: Siemens AG Österreich, 1210 Wien (AT)
(72) Erfinder: Falkner, Andreas, 1140 Wien (AT); Comploi-Taupe, Richard Josef, 3454 Sitzenberg - Reidling (AT); Haselböck, Alois, 3394 Schönbühel-Aggsbach (AT); Sperl, Simon, 4030 Linz (AT)
(74) Vertreter: Siemens Patent Attorneys

(57) **Zusammenfassung**

Diese Erfindung betrifft ein Verfahren (400) zum Bestimmen einer bevorzugten Produktvariante aus einer Gruppe von Produktvarianten, wobei das Verfahren (400) das Bestimmen (S16) von Kennzahlen bezüglich Nachhaltigkeit für Teilprodukte und/oder Verfahrensschritte für Teilprodukte für jede Produktvariante umfasst, wobei Kennzahlen eine Wahrscheinlichkeitsverteilung angeben. Das Verfahren (400) umfasst außerdem das Bestimmen (S16) eines Gesamtnachhaltigkeitswertes für jede Produktvariante basierend auf den Kennzahlen für die Teilprodukte und/oder Verfahrensschritte für Teilprodukte jeder Produktvariante, und das Angeben (S16) mindestens eines der bestimmten Gesamtnachhaltigkeitswerte und/oder das Bestimmen (S14) der bevorzugten Produktvariante basierend auf den Gesamtnachhaltigkeitswerten.

Die Erfindung betrifft außerdem entsprechende Einrichtungen.

## Beschreibung

Bei der Produktion eines konfigurierbaren Produkts (etwa durch einen Benutzer und/oder potentiellen Käufer) soll die nachhaltigste Variante gewählt werden. Dazu kann der Carbon Footprint (PCF) des konfigurierten Produkts möglichst genau bestimmt werden. Im PLM- bzw. SCM-System gibt es oft PCF-Daten der verwendeten Teile (PLM = Product Lifecycle Management, SCM = Supply Chain Management). Zusammenbau, und/oder Berechnen eines Gesamtnachhaltigkeitswertes, kann von ungenauen und/oder unvollständigen und/oder fehlerhaften PCT-Werten von Teilprodukten beeinträchtigt werden. Außerdem können nicht alle Nachhaltigkeitsaspekte durch PCF oder CO₂-Äquivalente von Teilprodukten abgedeckt werden.

Eine der Erfindung zugrunde liegende Aufgabe besteht in der Bereitstellung einer verbesserten Technik zur Bestimmung einer bevorzugten Produktvariante unter Nachhaltigkeitskriterien.

Die Erfindung löst die Aufgabe mittels der Gegenstände der unabhängigen Ansprüche. Unteransprüche geben bevorzugte Ausführungsformen wieder.

Ein Aspekt der Erfindung betrifft ein Verfahren zum Bestimmen einer bevorzugten Produktvariante aus einer Gruppe von Produktvarianten. Das Verfahren umfasst das Bestimmen von Kennzahlen bezüglich Nachhaltigkeit für Teilprodukte und/oder Verfahrensschritte für Teilprodukte für jede Produktvariante, wobei Kennzahlen eine Wahrscheinlichkeitsverteilung angeben, etwa jede der Kennzahlen, oder einige der Kennzahlen. Das Verfahren umfasst ferner das Bestimmen eines Gesamtnachhaltigkeitswertes für jede Produktvariante basierend auf den Kennzahlen für die Teilprodukte und/oder Verfahrensschritte für Teilprodukte jeder Produktvariante, sowie das Angeben mindestens eines der bestimmten Gesamtnachhaltigkeitswerte und/oder das Bestimmen der bevorzugten Produktvariante basierend auf den Gesamtnachhaltigkeitswerten. Somit können ungenaue oder fehlerhafte PCF-Daten von Teilen ausgeglichen oder berücksichtigt werden. Ferner kann etwa der CO₂-Verbrauch der Bearbeitungsschritte und Hilfsmaterialien mit einbezogen werden, und/oder es können andere relevante Metriken als PCF und/oder CO2 Äquivalente berücksichtigt werden. Das Verfahren kann von einer Verarbeitungseinrichtung wie einem Computer oder Computersystem ausgeführt sein oder werden.

Das Bestimmen von Kennzahlen kann das Empfangen von Kennzahlen und/oder das Auslesen aus einer oder mehreren Dateien und/oder Speichermedien umfassen. Somit können bereitgestellte und/oder vorbereitete Informationen und/oder Kennzahlen verwendet werden.

Es kann vorgesehen sein, dass die Wahrscheinlichkeitsverteilungen Normalverteilungen oder Gaußverteilung entsprechen. Es können auch andere Verteilungen verwendet werden, etwa Poisson-Verteilungen und/oder Binomial-Verteilungen. Eine solche Verteilung lässt sich einfach Parametrisieren, etwa durch Angabe weniger Parameter, was die Verarbeitung erleichtern kann. Unterschiedlichen Kennzahlen und/oder Teilprodukten und/oder Teilbearbeitungsschritten können unterschiedliche Verteilungen zugeordnet sein.

Das Verfahren kann das Angeben und/oder Herstellen der bevorzugten Produktvariante umfassen. Das Angeben kann das Anzeigen für einen Benutzer, etwa auf einem Bildschirm und/oder Ausdruck und/oder durch eine digitale Nachricht, und/oder Erzeugen und/oder Bereitstellen eines Herstellungsauftrags umfassen. Das Angeben und/oder Herstellen kann automatisiert erfolgen. Das Herstellen kann das Herstellen durch eine automatisierte Herstellungsanlage umfassen, welche etwa basierend auf einem Herstellungsauftrag angesteuert sein kann.

Es kann vorgesehen sein, dass der Gesamtnachhaltigkeitswert basierend auf Kennzahlen bestimmt wird, welche Betrieb und/oder Lebensdauer und/oder Wiederverwertung und/oder Toxizität von Teilprodukten jeder Produktvariante und/oder jeder Produktvariante betreffen. Somit kann eine breite Entscheidungsgrundlage verwendet werden. Solche Kennzahlen können als Wahrscheinlichkeitsverteilungen angeben sein.

Es kann vorgesehen sein, dass Kennzahlen nach Konfidenz gewichtet werden. Etwa kann die relative Größe eines Konfidenzintervalls für die Gewichtung der Kennzahl Basis sein. Dazu kann etwa eine Standardabweichung, oder ein Vielfaches einer Standardabweichung, und/oder eine Breite eines Konfidenzintervalls, etwa relativ zu einem Erwartungswert, Verwendung finden. Dies ermöglicht es, genauer bekannten Werten eine höhere Gewichtung zukommen zu lassen als weniger genau bekannten. In einigen Fällen kann eine niedrigere Gewichtung bedeuten, dass ein höherer Wert als ein Erwartungswert in eine Berechnung und/oder Optimierung einfließt.

Es kann vorgesehen sein, dass ein Gesamtnachhaltigkeitswert basierend auf einer Breite von Konfidenzintervallen bestimmt wird. Insbesondere kann vorgesehen sein, dass eine Verteilung und/oder ein Erwartungswert einer Verteilung basierend auf der Breite eines zugehörigen Konfidenzintervalls gewichtet wird, etwa basierend auf einer absoluten oder relativen Breite. Etwa kann einer Verteilung ein Wert zugewiesen sein, welcher bei N% der Verteilungsbreite angenommen wird, wobei N 50 oder höher sein kann, etwa 70 oder 75.

Allgemein kann die bevorzugte Produktvariante basierend auf mehreren Gesamtnachhaltigkeitswerten pro Produktvariante bestimmt werden. Somit können unterschiedliche Variablen berücksichtigt werden, welche durch unterschiedliche Kennzahlen repräsentiert sein können.

Das Verfahren kann insbesondere das Anzeigen von Gesamtnachhaltigkeitswerten umfassen, etwa für mehrere Produktvarianten. Dabei kann eine graphische Darstellung und/oder Auswahlmöglichkeit bereitgestellt werden, etwa um eine multi-variable Auswahl zu ermöglichen.

Allgemein kann ein Gesamtnachhaltigkeitswert und/oder eine Kennzahl eine CO₂ Emission oder ein Äquivalent und/oder ein PCF, und/oder einen Energieverbrauch, und/oder einen Materialverbrauch und/oder eine Toxizität betreffen. Es können mehrere Gesamtnachhaltigkeitswerte für eine Produktvariante bestimmt werden, etwa für einen multi-variablen Ansatz. Dabei können verschiedene Komponenten individuell gewichtet sein.

Es kann allgemein vorgesehen sein, dass ein Gesamtnachhaltigkeitswert eine Kennzahl ist, und/oder eine Verteilung angibt, etwa einen Hauptverteilungswert (wie Erwartungswert) und/oder ein oder mehrere Verteilungsintervalle und/oder Breiten; mehrere Intervalle können bei einer ungleichmäßigen Verteilung um den Hauptverteilungswert relevant sein, etwa bei Verteilung, die nicht Normalverteilungen entsprechen, und/oder im Falle, dass bestimmte Verteilung abgeschnitten werden.

Ferner ist eine Verarbeitungseinrichtung vorgesehen, welche dazu ausgebildet ist, ein hierin beschriebenes Verfahren durchzuführen. Dazu kann die Verarbeitungseinrichtung eine entsprechende Verarbeitungsschaltung aufweisen.

Es ist außerdem ein Computerprogrammprodukt vorgesehen, welches computer-ausführbare Instruktionen enthält, welche eine Verarbeitungseinrichtung dazu bringen, ein hierin beschriebenes Verfahren auszuführen, wenn das Computerprogrammprodukt auf der Verarbeitungseinrichtung ausgeführt wird. Das Computerprogrammprodukt kann ein Modul für jede Aktion und/oder Verfahrensschritt umfassen.

Ein computerlesbares Speichermedium ist beschrieben, welches ein hierin beschriebenes Computerprogrammprodukt speichert.

Ein Produkt kann allgemein mehrere Komponenten und/oder Teilprodukten umfassen. Teilprodukte können in Teilverfahrensschritten zu einem Produkt zusammengefügt werden, wobei ein Teilverfahrensschritt ein Teilschritt in einem Herstellungsverfahren sein kann. Ein solcher Teilschritt kann Herstellung und/oder Bearbeitung und/oder Transport umfassen.

Für Produkte kann es verschiedene Produktvarianten geben, etwa mit unterschiedlichen Teilprodukte (oder Komponenten). Teilprodukte oder Komponenten können sich dabei insbesondere hinsichtlich Herstellungs- und/oder Beschaffungsverfahren, und/oder Material und/oder Färbung unterscheiden. Es kann eine Konfigurationsmöglichkeit vorgesehen sein, welche es einem Benutzer ermöglicht, eine oder mehrere Produktvarianten auszuwählen und/oder aus Teilprodukten und/oder Teilverfahrensschritten zusammenzustellen. Das Angeben eines oder mehrerer Gesamtnachhaltigkeitswerte kann ein oder mehrere solcher Produktvarianten betreffen; dabei können weniger Varianten angeben werden als ursprünglich konfiguriert, etwa wenn eine Variante einen oder mehrere Grenzwerte oder Schranken nicht erfüllt, und/oder in allen Nachhaltigkeitswerten und/oder Kriterien schlechter abschneidet als eine andere Variante.

Eine Kennzahl kann allgemein durch einen oder mehrere Parameter repräsentiert sein, welche etwa einen Erwartungswert und/oder Mittelwert und/oder Hauptverteilungswert und/oder Zentralwert betreffen, und/oder ein Konfidenzintervall und/oder ein Verteilungsintervall angeben, und/oder dessen Breite, etwa absolut oder relativ. Ein Gesamtnachhaltigkeitswert kann ein Parameter und/oder Wert sein, welcher die Nachhaltigkeit eines vollständigen Produktes repräsentiert und/oder quantifiziert, etwa hinsichtlich CO₂ Äquivalent, und/oder einem oder mehreren anderen Werten. Dabei können Teilprodukte und zugehörige Teilverfahrensschritte berücksichtigt werden. Eine Breite eines Verteilungsintervalls kann auch als Verteilungsbreite bezeichnet werden. Eine Verteilungsbreite kann einem Sigma-Intervall, und/oder einem N-fachen eines Sigma-Intervalls entsprechen, wobei N ganzzahlig größer 1 sein kann, oder einem Konfidenzintervall, welches einer bestimmten Konfidenz entsprechen kann.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger (welcher auch als Speichermedium angesehen werden kann) abgespeichert sein. Merkmale oder Vorteile des Verfahrens können auf die Vorrichtung übertragen werden oder umgekehrt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Figur 1: eine erste Beispielsverteilung;
- Figur 2: eine weitere Beispielsverteilung;
- Figur 3: verschiedene Gesamtnachhaltigkeitswerte; und
- Figur 4: ein Verfahren
darstellt.

Bei der Produktion eines konfigurierbaren Produkts kann eine nachhaltigste Variante gewählt werden. Dazu kann vorgesehen sein, dass der Carbon Footprint (PCF) des konfigurierten Produkts möglichst genau bestimmt wird, als ein Bespiel für einen Gesamtnachhaltigkeitswert. Anstatt fehlende oder fehlerhafte Daten von Experten schätzten zu lassen, können erfindungsgemäß Wahrscheinlichkeitsverteilungen verwendet werden, was weniger zeitaufwendig sein kann, und/oder genauere Auswertung ermöglichen kann. Ferner können weitere Kriterien als PCF berücksichtigt werden.

Es kann etwa vorgesehen sein, Kennzahlen, etwa PCF-Werte für Teilprodukte, nicht als einfache Werte wie CO₂e (=CO2 Äquivalent) Werte im System wie einem PLM/SCM-System zu speichern, sondern als Wahrscheinlichkeitsverteilungen. Dabei können Normalverteilungen NV(µ,σ²) verwendet werden; diese lassen sich eindeutig durch Mittelwert µ und Standardabweichung σ spezifizieren, welche gemeinsam als eine Kennzahl angesehen werden können.

Es kann vorgesehen sein, eine Akzeptanzgrenze A für Wert-Abweichungen etwa als Prozentzahl festzulegen, etwa durch Konfiguration des Systems, und/oder Benutzerangabe. Beispielsweise kann A = 5% bedeuten, dass das akzeptable Streuintervall [µ - zσ , µ + zσ] auf beiden Seiten jeweils nur 5% des Mittelwerts umfasst, also zσ = 0,05 µ.

Der Parameter z kann dabei einfach ein Multiplikator für die Standardabweichung sein, etwa um die Abweichung in Prozent auch als Vielfaches von σ auszudrücken.

Für den menschlichen Bearbeiter können daraus leicht verständliche Kennzahlen abgeleitet werden - alternativ oder zusätzlich zur Visualisierung als Kurve:
Variationskoeffizient V = σ / µ: normiert die Standardabweichung mit Bezug zum Mittelwert und kann als Prozentwert angezeigt werden, z.B. 30% für eine Standardabweichung von 6 bei einem Mittelwert von 20 (oder σ = 3 bei µ =10).

Konfidenz K gibt an, mit welcher Wahrscheinlichkeit der tatsächliche Wert wie der PCF-Wert im akzeptablen Intervall [µ * (1 - A) , µ * (1 + A)] mit A = z * V liegt und kann als Prozentzahl (100 * Fläche unter der Dichtefunktion der Verteilung im akzeptablen Intervall, da Gesamtfläche unter der Dichtefunktion = 1) ausgedrückt werden, z.B. Konfidenz 95,45% bei z = 2, 90% bei z = 1,64, 68,27% bei z = 1, 50% bei z = 0,67. Dabei kann gelten: Konfidenz = 2 * (Zellenwert - 0,5), da beidseitig.

Daraus lässt sich über den Zusammenhang z * V = 5 = A leicht der nötige Variationskoeffizient (und die Standardabweichung) berechnen und umgekehrt, z.B. K = 95,45% entspricht V = 2,5% (5/2), K = 50% entspricht V = 7,42% (5/0,67).

Es kann eine 2σ-Umgebung = µ +/- 2σ als Verteilungsbreit verwendet werden: Minimal- und Maximalwert für ca. 95% Abdeckung des Wertespektrums (ggf. auch andere σ-Umgebungen)

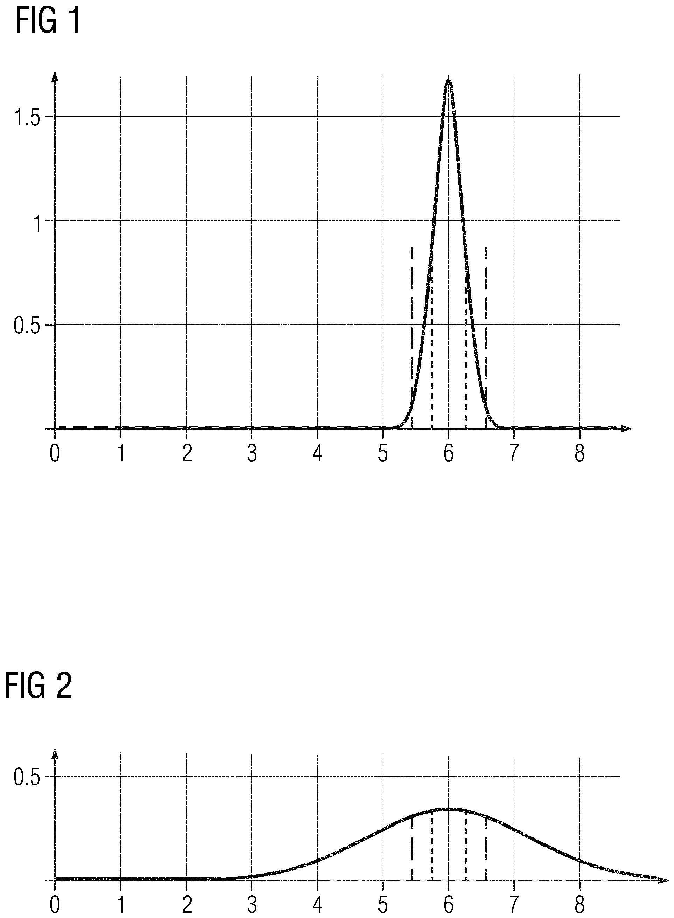

Mit Bezug auf Figur 1, welches eine Beispielsverteilung (Normalverteilung zeigt, können als Beispiele dienen:
A = 5% (0,05), M = 6, σ = 0,24. Daraus ergibt sich V = 4% (0,04 = 0,24 / 6), z = 1,25 (= 5% / 4%), und letztlich K = 79% (= 2 *(0,89435-0,5)) für die Grenzen von A bei 5,7 und 6,3 (die inneren vertikalen Linien in Figur 1).

In einem anderen Beispiel kann A = 10% (0,1), M = 6, σ = 0,24 verwendet werden. Daraus ergibt sich V = 4% (0,04 = 0,24 / 6), z = 2,5 (= 10% / 4%) und letztlich K = 99% (= 2 *(0,99379-0,5)) für die Grenzen von A bei 5,4 und 6,6 (äußere vertikale Linien in Figur 1).

In Figur 2 ist eine weitere Beispielsverteilung dargestellt. Hier kann als Bespiel verwendet werden:
A = 5% (0,05), M = 6, σ= 1,2.

Daraus ergibt sich V = 20% (0,2 = 1,2 / 6), z = 0,25 (= 5% / 20%) und letztlich K = 20% (= 2 * (0,59871-0,5)) für die Grenzen von A bei 5,7 und 6,3 (innere vertikale Linien in Figur 2) .

Ein weiteres Beispiel ergibt sich mit A = 10% (0,1), M = 6, σ = 1,2. Daraus ergibt sich V = 20% (0,2 = 1,2 / 6), z = 0,5 (= 10% / 20%) und letztlich K = 38% (= 2 * (0,69146-0,5)) für die Grenzen von A bei 5,4 und 6,6 (äußere vertikale Linien in Figur 2)

Kennzahlen, etwa CO2e-Werte der Produktionsschritte inkl. der dafür benötigten Hilfsmaterialien, können bestimmt und/oder hinterlegt werden, z.B. im Produktionsplanungssystem.

Bei der Konfiguration (Selektion) des Produkts und/oder der Produktvariante(n) können die entsprechenden Kennzahlen und/oder Verteilungen, etwa NVᵢ(µᵢ,σᵢ²)in eine BOM (Bill-of-Materials, Materialliste) und BOP (Bill-of-Process, Bearbeitungsliste) übernommen und durch Addition (und/oder Faltung) aller Wahrscheinlichkeitsverteilungen NVi die NV(µ,σ²) des PCF des Gesamtprodukts berechnet werden: µ = SUM(µᵢ) und σ = SUM(σᵢ²) für alle i aus BOM und BOP.

Zu jedem Teilprodukt und/oder Material und/oder Schritt können die erforderliche Kennzahl verfügbar sein. Dabei kann durch Umkehrung der Formel für die Konfidenz etwa die Standardverteilung aus der Konfidenz berechnet werden.

Es kann vorgesehen sein, dass für fehlende Daten der Durchschnitt aller anderen Daten des Produkts angesetzt wird; damit kann verhindert werden, dass fehlende Daten etwa als Nullwerte einen übergroßen Einfluss auf die Bestimmung nehmen.

Diese Bestimmung oder Rechnung kann für verschiedene Produktvarianten ausgeführt werden und dadurch das Produkt mit dem geringsten PCF oder Gesamtnachhaltigkeitswert bestimmt werden. Dabei können Produkte mit einer geringeren Ungenauigkeit (etwa Standardabweichung) bevorzugt werden, etwa durch entsprechende Gewichtung: Zur Optimierung kann anstelle von µ ein Wert OS verwendet werden. OS kann dem Wert entsprechen bei welchem die Fläche unter der Dichtefunktion der Verteilung S% der Gesamtfläche ist. Zum Beispiel kann S ∈ [50,70] vorgesehen sein, und eine Art von Sicherheitsfaktor als Prozentwert bereitstellen, der etwa vom Bearbeiter gesetzt werden kann. Ein höheres S bedeutet mehr Misstrauen in die Unsicherheit (die sich durch höheres σ ergibt) und führt zu mehr Vorsicht. S = 50% entspricht µ. S = 70% entspricht µ + 0,53σ, also einem höheren Wert, was einer niedrigeren Gewichtung entsprechen kann, da zur Bestimmung einer bevorzugten Variante ein niedriger Wert für die Nachhaltigkeit wichtiger sein kann. Dies kann als Gewichtung basierend auf Konfidenz und/oder Bestimmen basierend auf Breite der Verteilung angesehen werden.

Analoge Bestimmungen oder Rechnungen können für andere Metriken für die Nachhaltigkeit ausgeführt werden, z.B. CO₂e beim Betrieb (je Jahr, über die geplante Lebenszeit), und/oder CO₂e beim Recycling, oder Risiko durch toxische Materialien. Dabei können andere Einheiten als CO₂e verwendet werden. Die Zusammenführung der verschiedenen Metriken kann durch Normierung erfolgen, etwa auf das Intervall [0,1] durch (Wert - Min) / (Max - Min) und Summierung.

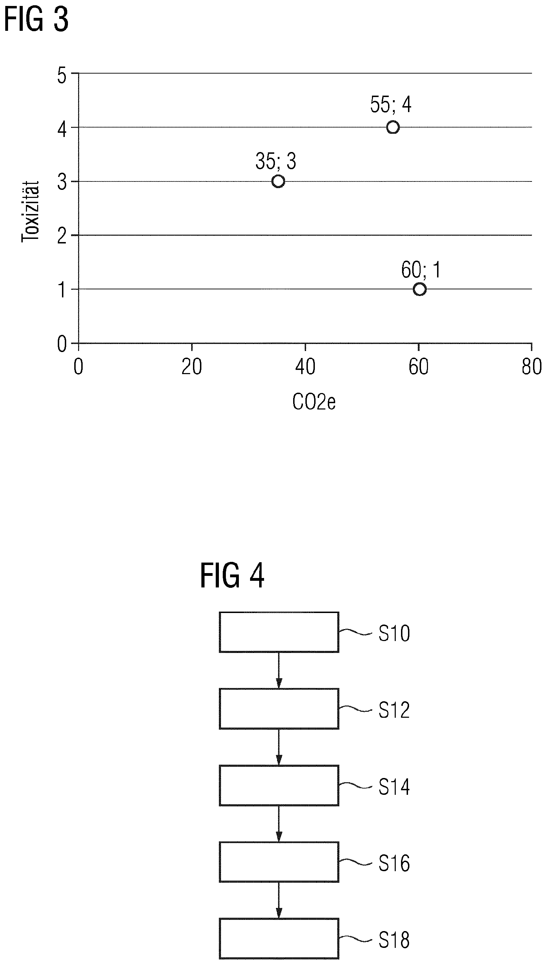

Optional kann Pareto-Optimierung (multi-variable Optimierung) erfolgen, etwa unter Verantwortung des Bearbeiters. Dabei können etwa, wie in Figur 3 gezeigt, verschiedene Produktvarianten mit mehreren Gesamtnachhaltigkeitswerten angezeigt werden. Zusätzlich zu Hauptverteilungswerten können Konfidenzintervalle und/oder Verteilungsintervalle angegeben sein. Die angegebenen Hauptverteilungswerte oder Gesamtnachhaltigkeitswerte können wie oben beschrieben basierend auf Konfidenz und/oder Verteilungsbreite gewichtet sein.

Figur 4 zeigt ein Flussdiagramm eines beispielhaften erfindungsgemäßen Verfahrens 400 zum Bestimmen einer bevorzugten Produktvariante aus einer Gruppe von Produktvarianten. Das Verfahren 400 kann das Bestimmen und/oder Konfigurieren der Produktvarianten umfassen, etwa basierend auf einer Benutzereingabe, und/oder automatisiert. Dazu kann etwa ein Programmprodukt zur Umsetzung des Verfahrens 400 ein entsprechendes Modul wie ein Konfigurationsmodul und/oder ein Variantenmodul umfassen.

Das Verfahren 400 umfasst eine Aktion S10 des Bestimmens von Kennzahlen bezüglich Nachhaltigkeit für Teilprodukte und/oder Verfahrensschritte für Teilprodukte für jede Produktvariante. Kennzahlen geben dabei eine Wahrscheinlichkeitsverteilung an. Genaue Werte können etwa durch eine Breite von 0 für die Verteilung dargestellt werden, um eine einheitliche Berechnung zu ermöglichen. Ein Programmprodukt kann ein entsprechendes Kennzahlbestimmungsmodul umfassen.

In einer Aktion S12 ist das Bestimmen eines Gesamtnachhaltigkeitswertes für jede Produktvariante basierend auf den Kennzahlen für die Teilprodukte und/oder Verfahrensschritte für Teilprodukte jeder Produktvariante vorgesehen. Ein Programmprodukt kann ein entsprechendes Nachhaltigkeitswertbestimmungsmodul umfassen.

Ferner ist das in einer Aktion S14 das Angeben mindestens eines der bestimmten Gesamtnachhaltigkeitswerte und/oder das Bestimmen der bevorzugten Produktvariante basierend auf den Gesamtnachhaltigkeitswerten vorgesehen, etwa durch Aussortieren nachteiliger Produktvarianten, welche etwa vorgegebene Grenzwerte überschreiten und/oder in allen Gesamtnachhaltigkeitswerten schlechter abschneiden als mindestens eine andere Variante. Grenzwerte können dabei vom Benutzer konfiguriert sein, und/oder im System vorgegeben sein. Ein oder mehrere Grenzwerte können Nebenbedingungen betreffen, etwa hinsichtlich finanzieller Kosten, und/oder Herstellungsdauer und/oder Herstellungsort. Ein Programmprodukt kann ein entsprechendes Angabemodul und/oder Bestimmungsmodul umfassen.

Das Verfahren 400 kann ferner in einer Aktion S16 das Angeben der bevorzugten Produktvariante umfassen, etwa für einen Benutzer, und/oder in einem Herstellungsauftrag. Dabei können erstelle BOM und/oder BOP im Auftrag enthalten sein. Ferner kann eine Aktion (oder Aktionsserie) S18 vorgesehen sein, welche das Herstellen der bevorzugten Produktvariante umfassen kann, etwa in einem automatisierten Produktionssystem. Ein Programmprodukt kann ein entsprechendes Variantenangabemodul und/oder Herstellungssteuerungsmodul umfassen.

Erfindungsgemäß können individualisierte Produkte einfach unter Nachhaltigkeitsgesichtspunkten erstellt werden, wobei Unsicherheiten bei einzelnen Nachhaltigkeitswerten ausgeglichen beziehungsweise berücksichtigt werden können.

Das Bestimmen einer bevorzugten Produktvariante kann allgemein als Optimierung angesehen werden.

Allgemein kann erfindungsgemäß das Bereitstellen von Kennzahlen vorgesehen sein, etwa in Form von Normalverteilungen für Teilprodukte bzw. Verarbeitungsschritte von Teilprodukten. Ferner kann das Berechnen des gesamten Nachhaltigkeitswerts für unterschiedlich konfigurierte Produkte oder Varianten basierend auf den Kennzahlen vorgesehen sein. Eine Auswahl eines optimalen Produkts mit dem jeweils geringsten Werten für Teilprodukte und Verarbeitungsschritte und/oder optimierter Gesamtnachhaltigkeit kann erfolgen. Das Produkts kann entsprechend hergestellt werden.

Als kleines Anschauungsbeispiel soll ein kleiner Tisch produziert werden: Er besteht aus einem Bein mit Standfuß aus Holz und einer Tischplatte aus Holz oder Kunststoff, die entweder angeklebt oder - im Fall von Plastik - angeschraubt werden kann.

Die Zulieferer haben folgende Werte gemeldet:

| | CO2e | Konfidenz | Toxizität | Konfidenz |
|---|---|---|---|---|
| Standfuß (Holz) | 10 | 100% | 0 | 100% |
| Tischplatte (Holz) | 20 | 50% | 0 | 100% |
| Tischplatte (Kunststoff) | 40 | 90% | 1 | 100% |

Aus der Produktion (Historie) sind folgende Werte bekannt:

| | CO2e | Konfidenz | Toxizität | Konfidenz |
|---|---|---|---|---|
| Kleben | 5 | 95% | 3 | 100% |
| Schrauben | 10 | 90% | 0 | 100% |

Daraus kann die nachhaltigste Produktvariante (auf Basis des Gesamt-PCF) berechnet werden:

| | CO2e | Konf | Var | Tox | nMW | nTox | nSum | Rang |
|---|---|---|---|---|---|---|---|---|
| Holz - geklebt | 35 | 76% | 2,24 | 3 | 0,00 | 0, 67 | 0, 67 | 1 |
| -BOM: Fuss | 10 | 100% | 0,00 | 0 | | | | |
| -BOM: Platte | 20 | 50% | 2,23 | 0 | | | | |
| -BOP: Kleben | 5 | 95% | 0, 02 | 3 | | | | |
| Kunststoff - geklebt | 55 | 98% | 1,50 | 4 | 0,80 | 1,00 | 1,80 | - |
| -BOM: Fuss | 10 | 100% | 0,00 | 0 | | | | |
| -BOM: Platte | 40 | 90% | 1,49 | 1 | | | | |
| -BOP: Kleben | 5 | 95% | 0, 02 | 3 | | | | |
| Kunststoff - geschraubt | 60 | 98% | 1,58 | 1 | 1,00 | 0,00 | 1,00 | 2 |
| -BOM: Fuss | 10 | 100% | 0,00 | 0 | | | | |
| -BOM: Platte | 40 | 90% | 1,49 | 1 | | | | |
| -BOP: Schrauben | 10 | 90% | 0, 09 | 0 | | | | |

Dabei werden die Dimensionen (CO2e, Toxizität) zuerst normiert (nMW, nTox), dann summiert (nSum).

Die Variante Kunststoff - geklebt, wird überhaupt ausgeschieden, da sie von der Vollholz-Variante dominiert wird, welche in allen Parametern eine bessere Variante darstellt.

Als Ergebnis wählt das System Vollholz geklebt (Rang 1) als nachhaltigste Variante des Tisches für die Produktion.

In einem User-Interface könnte der die Pareto-Front angezeigt werden, damit sie entscheiden kann, ob geringere CO2e oder geringere Toxizität wichtig sind, etwa wie in Figur 3 dargestellt.

Erfindungsgemäß kann genauere Berechnung mit wenig mehr Speicher und Berechnungsaufwand erfolgen. Es kann ferner eine höhere Verlässlichkeit des berechneten PCF und/oder der Nachhaltig des Gesamtprodukts erreicht werden. Dabei kann eine höhere Nachhaltigkeit der konfigurierten/selektierten Produkte erzielt werden. Ferner kann eine bessere Verständlichkeit (Visualisierung) für den Bearbeiter und damit bessere Entscheidungsgrundlage bereitgestellt sein. Eine effiziente Umrechnung zwischen Konfidenz und Standardabweichung kann erfolgen.

Die Verarbeitungseinrichtung kann allgemein Verarbeitungslogik, und/oder Verarbeitungsschaltungen, und/oder Speicher aufweisen, welche betreibbar sind, um das Verfahren 400 auszuführen. Es kann vorgesehen sein, dass die Verarbeitungseinrichtung ein einzelnes System oder ein verteiltes System repräsentiert, etwa einen oder mehrere Computer und/oder ein Computersystem, und/oder als Cloud-System implementiert ist. Eine Verarbeitungslogik kann eine integrierte Schaltung und/oder eine oder mehrere Prozessoren und/oder Controller und/oder ASICs (Application Specific Integrated Circuitry, Anwendungsspezifische integrierte Schaltung) oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM (Random Access Memory) und/oder optischen Speicher und/oder magnetischen Speicher und/oder Flash und/oder NAND (Not AND) Speicher, usw.

Es kann allgemein ein Speichermedium vorgesehen sein, welches Instruktionen speichert, die dazu geeignet sind, eine Verarbeitungseinrichtung dazu zu bringen, das hierin beschrieben Verfahren 400 auszuführen. Das Speichermedium kann insbesondere ein nicht-flüchtiges und/oder nicht-transitorisches Medium sein. Es ist ein Computerprogramm beschrieben, welches derartige Instruktionen aufweist. Das Computerprogramm kann Module aufweisen, um die Aktionen und/oder Schritte des Verfahrens 400 auszuführen, insbesondere ein Repräsentationsmodul, und/oder ein Anfragemodul, und/oder ein Verteilungsmodul, welches insbesondere ein oder mehrere Untermodule aufweisen kann, etwa ein Verschiebungsmodul und/oder ein Optimierungsmodul.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

### Bezugszeichenliste

- 400: Verfahren
- S10: Bestimmen von Kennzahlen
- S12: Bestimmen eines Gesamtnachhaltigkeitswertes
- S14: Angeben eines Gesamtnachhaltigkeitswerts und/oder Bestimmen einer bevorzugten Produktvariante
- S16: Angeben der bevorzugten Produktvariante; Anzeigen von Gesamtnachhaltigkeitswerten
- S18: Herstellen der bevorzugten Produktvariante

## Patentansprüche

1. Verfahren (400) zum Bestimmen einer bevorzugten Produktvariante aus einer Gruppe von Produktvarianten, wobei das Verfahren umfasst:
- Bestimmen (S10) von Kennzahlen bezüglich Nachhaltigkeit für Teilprodukte und/oder Verfahrensschritte für Teilprodukte für jede Produktvariante, wobei Kennzahlen eine Wahrscheinlichkeitsverteilung angeben;
- Bestimmen (S12) eines Gesamtnachhaltigkeitswertes für jede Produktvariante basierend auf den Kennzahlen für die Teilprodukte und/oder Verfahrensschritte für Teilprodukte jeder Produktvariante;
- Angeben (S14) mindestens eines der bestimmten Gesamtnachhaltigkeitswerte und/oder Bestimmen (S14) der bevorzugten Produktvariante basierend auf den Gesamtnachhaltigkeitswerten.

2. Verfahren nach Anspruch 1, wobei die Wahrscheinlichkeitsverteilungen Normalverteilungen entsprechen.

3. Verfahren nach einem der vorangehenden Ansprüche, wobei das Verfahren das Angeben (S16) und/oder Herstellen (S18) der bevorzugten Produktvariante umfasst.

4. Verfahren nach einem der vorangehenden Ansprüche, wobei der Gesamtnachhaltigkeitswert basierend auf Kennzahlen bestimmt wird, welche Betrieb und/oder Lebensdauer und/oder Wiederverwertung und/oder Toxizität von Teilprodukten jeder Produktvariante und/oder jeder Produktvariante betreffen.

5. Verfahren nach einem der vorangehenden Ansprüche, wobei Kennzahlen nach Konfidenz gewichtet werden.

6. Verfahren nach einem der vorangehenden Ansprüche, wobei ein Gesamtnachhaltigkeitswert basierend auf einer Breite von Konfidenzintervallen bestimmt wird.

7. Verfahren nach einem der vorangehenden Ansprüche, wobei die bevorzugte Produktvariante basierend auf mehreren Gesamtnachhaltigkeitswerten pro Produktvariante bestimmt wird.

8. Verfahren nach einem der vorangehenden Ansprüche, wobei das Verfahren ferner das Anzeigen (S16) von Gesamtnachhaltigkeitswerten umfasst.

9. Verfahren nach einem der vorangehenden Ansprüche, wobei der Gesamtnachhaltigkeitswert eine CO₂ Emission, und/oder einen Energieverbrauch, und/oder einen Materialverbrauch und/oder eine Toxizität betrifft.

10. Verarbeitungseinrichtung, welche dazu ausgebildet ist, ein Verfahren nach einem der Ansprüche 1 bis 9 durchzuführen.

11. Computerprogrammprodukt, welches computer-ausführbare Instruktionen enthält, welche eine Verarbeitungseinrichtung dazu bringen, ein Verfahren nach einem der Ansprüche 1 bis 9 auszuführen, wenn das Computerprogrammprodukt auf der Verarbeitungseinrichtung ausgeführt wird.

12. Computerlesbares Speichermedium, welches ein Computerprogrammprodukt nach Anspruch 11 speichert.
